(19) Europäisches Patentamt
European Patent Office
Office européen des brevets

(11) **EP 4 679 801 A1**

(12) **EUROPEAN PATENT APPLICATION**
published in accordance with Art. 153(4) EPC

(43) Date of publication:
**14.01.2026 Bulletin 2026/03**

(21) Application number: **23945506.6**

(22) Date of filing: **20.07.2023**

(51) International Patent Classification (IPC):
***H04L 47/283*** (2022.01)

(52) Cooperative Patent Classification (CPC):
**H04L 47/283**

(86) International application number:
**PCT/CN2023/108480**

(87) International publication number:
**WO 2025/015618 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **New H3C Technologies Co., Ltd.**
**Hangzhou, Zhejiang 310052 (CN)**

(72) Inventors:
• **GUO, Daorong**
  **Beijing 100102 (CN)**
• **YOU, Xuejun**
  **Beijing 100102 (CN)**
• **XU, Shenchao**
  **Beijing 100102 (CN)**

(74) Representative: **IPAZ**
**Bâtiment Platon**
**Parc Les Algorithmes**
**91190 Saint-Aubin (FR)**

(54) **DELAY COMPENSATION METHOD AND APPARATUS, AND FORWARDING NODE**

(57)    A delay compensation method and apparatus, and a forwarding node, applied to a delay compensation node. The method comprises: receiving a first data packet via a first path among a group of target paths, the first data packet carrying first residence delays of multiple network domains, and the first data packet belonging to a target deterministic service flow; forwarding the first data packet to obtain the second data packet; acquiring a first compensation upper limit value of the target deterministic service flow on the first path, the first compensation upper limit value being determined on the basis of second residence delays of all network domains which a third data packet of the target deterministic service flow passes through on the first path, and a sum of adjustment delays corresponding to the first path; taking a difference between the first compensation upper limit value and a sum of all first residence delays as a current compensation delay; and scheduling the second data packet after delaying the current compensation delay. By applying the technical scheme provided by the embodiments of the present application, jitter in an end-to-end service can be reduced, thereby ensuring deterministic transmission of the end-to-end service.

Fig. 2

The flowchart steps:

S21 — receiving a first data packet via a first path in a target path group, wherein the first data packet carries a first residence delay of each network domain that first data packet passes through on first path, and the first data packet belongs to target deterministic service flow

S22 — performing forwarding processing on the first data packet to obtain a second data packet

S23 — obtaining first compensation upper limit value for target deterministic service flow on first path, first compensation upper limit value being determined based on a sum of adjustment delay corresponding to first path, and second residence delays of all network domains that third data packet of target deterministic service flow passes through on first path

S24 — taking a difference between the first compensation upper limit value and a sum of all the first residence delays as a current compensation delay

S25 — scheduling the second data packet after delaying the second data packet for the current compensation delay

EP 4 679 801 A1

## Description

### Technical field

The present disclosure relates to the technical field of communications, and in particular to a delay compensation method, apparatus and forwarding nodes.

### Background

In deterministic networks, end-to-end services may span multiple network domains and employ different queuing mechanisms in each network domain. Jitters in end-to-end services spanning multiple network domains fail to meet the requirements of high deterministic load due to the scheduling and service admission control at network domain boundaries and different queuing and forwarding mechanisms within deterministic network domains.

### Summary

It is an object of examples of the present disclosure to provide a delay compensation method, apparatus, and a forwarding node to reduce the jitters in the end-to-end service and ensure the deterministic transmission of the end-to-end service. The specific technical solutions are as follows:

In a first aspect, examples of the present disclosure provide a delay compensation method applied to a delay compensation node. The method comprises:

receiving a first data packet via a first path in a target path group, wherein the first data packet carries a first residence delay of each network domain that the first data packet passes through on the first path, and the first data packet belongs to a target deterministic service flow;

performing forwarding processing on the first data packet to obtain a second data packet;

obtaining a first compensation upper limit value for the target deterministic service flow on the first path, wherein the first compensation upper limit value is determined based on a sum of an adjustment delay corresponding to the first path, and second residence delays of all network domains that a third data packet of the target deterministic service flow passes through on the first path;

taking a difference between the first compensation upper limit value and a sum of all the first residence delays as a current compensation delay;

scheduling the second data packet after delaying the second data packet for the current compensation delay.

In a second aspect, examples of the present disclosure provide a delay compensation apparatus applied to a delay compensation node. The device comprises a parsing module, a forwarding module, a compensation module and a scheduling module;

the parsing module is to receive a first data packet via a first path in a target path group, wherein the first data packet carries a first residence delay of each network domain that the first data packet passes through on the first path, and the first data packet belongs to a target deterministic service flow; and send the first data packet to the forwarding module;

the forwarding module is to perform forwarding processing on the first data packet to obtain a second data packet; and send the second data packet to the compensation module;

the compensation module is to obtain a first compensation upper limit value for the target deterministic service flow on the first path, wherein the first compensation upper limit value is determined based on a sum of an adjustment delay corresponding to the first path, and second residence delays of all network domains that a third data packet of the target deterministic service flow passes through on the first path; take a difference between the first compensation upper limit value and a sum of all the first residence delays as a current compensation delay; and after delaying for the current compensation delay, send the second data packet to the scheduling module;

the scheduling module is to schedule the second data packet.

In a third aspect, examples of the present disclosure provide a forwarding node performing the delay compensation method described in any of the above.

In the technical solution provided by the examples of the present disclosure, the delay compensation node determines the first compensation upper limit value for the target deterministic service flow on the first path based on sum of the adjustment delay corresponding to the first path, and the residence delays of all the network domains that the third data packet of the target deterministic service flow passes through on the first path. The head node and the tail node of a section of the first path within one network domain can easily and quickly achieve time synchronization, and thus accurately obtain the residence delays of the third data packet/first data packet within the network domain. The delay compensation node can accurately determine the first compensation upper limit value based on the accurately obtained second residence delays, and thus accurately determine the current compensation delay. Based on the accurate current compensation delay, the delay compensation node performs delay compensation on the data packet, which can effectively eliminate jitters and reduce the jitter in the end-to-end service, such as reducing the jitter between the head node and the tail node of the target path group, and ensuring the deterministic transmission of the end-to-end service.

**Brief Description of the Drawings**

The accompanying drawings illustrated herein are used to provide a further understanding of the present disclosure and form a part of the present disclosure, and the schematic examples of the present disclosure and their descriptions are used to explain the present disclosure and do not constitute an undue limitation on the present disclosure.

FIG. 1 shows a schematic diagram of a group network for end-to-end services provided by an example of the present disclosure;

FIG. 2 shows a schematic flow chart of a delay compensation method provided by an example of the present disclosure;

FIG. 3 shows a schematic flow chart of a method for obtaining a compensation upper limit value provided by an example of the present disclosure;

FIG. 4 shows a schematic diagram of time points for receiving data packets provided by an example of the present disclosure;

FIG. 5 shows a schematic structure diagram of a delay compensation apparatus provided by an example of the present disclosure;

FIG. 6 shows another schematic structure diagram of the delay compensation apparatus provided by an example of the present disclosure;

FIG. 7 shows another schematic diagram of the group network for end-to-end services provided by an example of the present disclosure;

FIG. 8a shows a schematic structure diagram of a self-learning module provided by an example of the present disclosure;

FIG. 8b shows a schematic structure diagram of a data caching table provided by an example of the present disclosure;

FIGS. 9a-9d show schematic flow charts illustrating the learning of compensation upper limit values provided by an example of the present disclosure.

**Detailed Description**

In order to make the objects, technical solutions, and advantages of the present disclosure more clearly understood, the present disclosure will be described in more details below with reference to the accompanying drawings and examples. Obviously, the described examples are only a part of the examples of the present disclosure, and not all of them. All other examples obtained based on the examples in the present disclosure by ordinary skilled in the art fall within the scope of protection of the present disclosure.

Currently, the number of global machine communication connections is growing at a high rate year by year, approaching 30 billion, and it is expected to reach the scale of 1,000 billion connections by 2035. The whole industry Internet that focuses on connecting intelligent machines will become an important development direction of the future network. The communication mode and service model of the intelligent machines will change fundamentally, in which data communication scenarios such as remote control, intelligent manufacturing, and land, sea, and air integration put forward highly deterministic loading requirements of ultra-low delay and ultra-low jitter for the network.

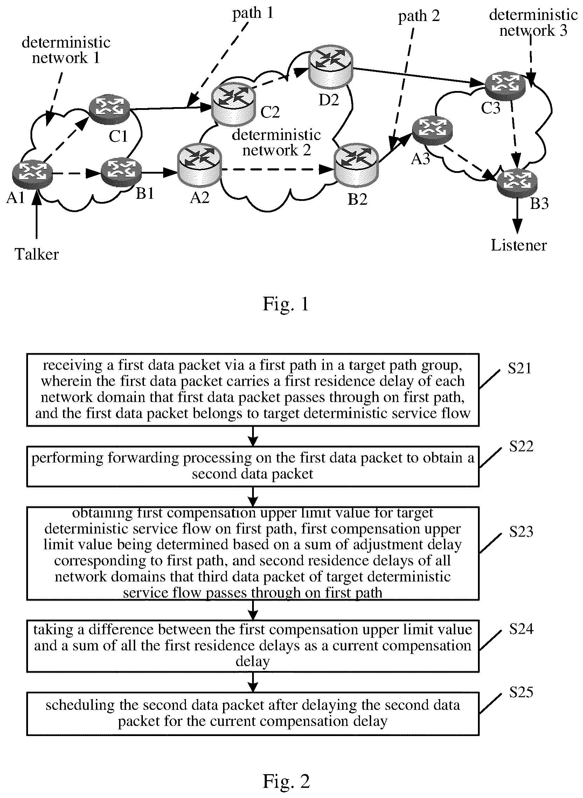

In a deterministic network, the end-to-end service may span multiple network domains, such as the group network shown in Fig. 1, which consists of 3 network domains, e.g., a deterministic network 1 to a deterministic network 3; deterministic network 1 consists of 3 forwarding nodes, e.g., A1, B1, and C1; deterministic network 2 consists of 4 forwarding nodes, e.g., A2, B2, C2, and D2; and deterministic network 3 consists of 3 forwarding nodes, e.g., A3, B3 and C3. The communication between a message sender (Talker) and a message receiver (Listener) spans three network domains such as deterministic network 1 to deterministic network 3. The forwarding nodes can be routers or switches, etc. Different queuing mechanisms are used for deterministic network 1 to deterministic network 3. Jitters in end-to-end services spanning multiple network domains fail to meet the requirements of high deterministic load due to the scheduling and service admission control at network domain boundaries and different queuing and forwarding mechanisms within deterministic network domains.

To reduce jitters in the end-to-end services and ensure the deterministic transmission of the end-to-end services, based on multipath planning, examples of the present disclosure provide a delay compensation method, as shown in FIG. 2. The delay compensation method is applied to a forwarding node that performs delay compensation, referred to as a delay compensation node (compensation node), and the delay compensation node may be a tail node of a path, such as the forwarding node B3 in FIG. 1, or an intermediate node, such as the forwarding nodes A3 and C3 in FIG. 1, and so on. The above delay compensation method comprises the following blocks.

Block S21, receiving a first data packet via a first path in a target path group, wherein the first data packet carries a first residence delay of each network domain that the first data packet passes through on the first path, and the first data packet belongs to a target deterministic service flow.

Block S22, performing forwarding processing on the first data packet to obtain a second data packet.

Block S23, obtaining a first compensation upper limit value for the target deterministic service flow on the first path, wherein the first compensation upper limit value is determined based on a sum of an adjustment delay corresponding to the first path, and second residence delays of all network domains that a third data packet of the target deterministic service flow passes through on the first path.

Block S24, taking a difference between the first compensation upper limit value and a sum of all the first residence delays as a current compensation delay.

Block S25, scheduling the second data packet after delaying the second data packet for the current compensation delay.

In the technical solution provided by the examples of the present disclosure, the delay compensation node determines the first compensation upper limit value for the target deterministic service flow on the first path based on the sum of the adjustment delay corresponding to the first path, and the residence delays of all the network domains that the third data packet of the target deterministic service flow passes through on the first path. The head node and the tail node of a section of the first path within a network domain can easily and quickly achieve time synchronization, and thus accurately obtain the residence delays of the third data packet/first data packet within the network domain. The delay compensation node can accurately determine the first compensation upper limit value based on the accurately obtained second residence delays, and thus accurately determine the current compensation delay. Based on the accurate current compensation delay, the delay compensation node performs delay compensation on the data packet, which can effectively eliminate jitters and reduce the jitter in the end-to-end service, such as reducing the jitter between the head node and the tail node of the target path group, and ensuring the deterministic transmission of the end-to-end service.

In addition, the technical solution provided by the examples of the present disclosure requires only time synchronization within a network domain to achieve accurate delay compensation without a need for time synchronization spanning domains, which reduces the difficulty of implementing the solution and facilitates a wide range of applications, as well as improves the accuracy of the delay compensation.

In the above block S21, the target deterministic service flow is any deterministic service flow, the deterministic service flow is a service flow that requires deterministic transmission, such as the deterministic service flow to which the data packet sent by the message sender to the message receiver in FIG. 1 belongs, and the first data packet may be any data packet of the target deterministic service flow. The target path group is a path group that serves to protect the target deterministic service flow, and the target path group comprises a plurality of paths, such as the path group composed of path 1 and path 2 in FIG. 1. The first path is any path in the target path group. In transmitting the first data packet through the target path group, the head node copies one first data packet for each path included in the target path group and transmits one first data packet through each path separately.

For an end-to-end service that spans multiple network domains, each path spans multiple network domains, and when a data packet is transmitted along a path, it may pass through each of the network domains spanned in the path, and the residence delay of the data packet in each network domain is the transmission delay of the data packet in each network domain. Different data packets passing through the same network domain on the same path may have the same or different residence delays in that network domain. The forwarding node can statistically obtain the residence delay in each network domain that the data packet passes through on the path and add the statistically obtained residence delay into the data packet.

Still take the group network shown in FIG. 1 as an example. The message sender and the message receiver span three network domains, and the message sender sends data packet 1 (e.g., the first data packet described above) to the message receiver via path 1 and path 2 (e.g., the first path described above), respectively. The node B3 is a delay compensation node.

The node B3 receives the data packet 1 via the path 1, which carries a residence delay 11, a residence delay 12, and a residence delay 13, the residence delay 11 is a residence delay of the deterministic network 1 that the data packet 1 passes through on the path 1, the residence delay 12 is a residence delay of the deterministic network 2 that the data packet 1 passes through on the path 1, and the residence delay 13 is a residence delay of the deterministic network 3 that the data packet 1 passes through on the path 1 of the deterministic network 3.

The node B3 receives the data packet 1 via the path 2, which carries a residence delay 21, a residence delay 22, and a residence delay 23, the residence delay 21 is a residence delay of the deterministic network 1 that the data packet 1 passes through on the path 2, the residence delay 22 is a residence delay of the deterministic network 2 that the data packet 1 passes through on the path 2, and the residence delay 23 is a residence delay of the deterministic network 3 that the data packet 1 passes through on the path 2.

The forwarding process in the above block S22 comprises, but is not limited to, querying an outgoing interface, a packet re-encapsulation, and the like. The delay compensation node performs forwarding processing on the first data packet to obtain the second data packet.

In the above block S23, the third data packet may be any data packet of the target deterministic service flow, and the third data packet and the first data packet may be the same or different. The delay compensation node may calculate a sum of an adjustment delay corresponding to the first path, and second residence delays of all network domains that the third data packet of the target deterministic service flow passes through on the first path, and determine the sum as a first compensation upper limit value. The first compensation upper limit value may be understood as a maximum compensation delay used for the delay compensation of the data packet of the target deterministic service flow transmitted via the first path.

Upon receiving the first data packet, the delay compensation node obtains a compensation upper limit value for the target deterministic service flow on the first path, i.e., the first compensation upper limit value.

In the examples of the present disclosure, the delay compensation node may obtain the first compensation upper limit value in any of the following ways.

In a first way, the first data packet carries the first compensation upper limit value. The delay compensation node obtains, from the first data packet, the first compensation upper limit value.

In this way, the head node of the target path group can encapsulate the first compensation upper limit value in the first data packet, and the delay compensation node, after receiving the first data packet, can directly extract the first compensation upper limit value from the first data packet without looking up a table, which improves the packet processing efficiency.

In a second way, the delay compensation node stores the compensation upper limit value for the target deterministic service flow on each path in the target path group, that is, the delay compensation node stores correspondences among deterministic service flows, paths, and compensation upper limit values. The delay compensation node searches for the first compensation upper limit value from the stored compensation upper limit value for the target deterministic service flow on each path in the target path group.

In this way, after receiving the first data packet, the delay compensation node can find the first compensation upper limit value from the locally stored correspondences based on an identifier of the first path for transmitting the first data packet and an identifier of the target deterministic service flow, without a need for the first data packet to carry the first compensation upper limit value, which reduces the packet load and saves the network bandwidth.

In the examples of the present disclosure, the delay compensation node may also obtain the first compensation upper limit value in other ways, which is not limited. The order of execution of the above block S22 and the above block S23 is not limited.

In the above block S24, the delay compensation node statistically obtains the sum value of all the first residence delays and calculates a difference between the first compensation upper limit value and the statistically obtained sum value, and wherein the difference is the current compensation delay.

An example of block S21 above is illustrated. The node B3 receives a data packet 1 via path 1, which carries a residence delay 11, a residence delay 12, and a residence delay 13. The node B3 obtains a first compensation upper limit value being Cap1. The node B3 statistically obtains a sum value ActD1 of the residence delay 11, the residence delay 12, and the residence delay 13, and thus determines the current compensation delay CompD1 to be: Cap1-ActD1 .

In the above block S25, after obtaining the current compensation delay, the delay compensation node delays the second data packet, i.e., schedules the second data packet after delaying the second data packet for the current compensation delay. As in FIG. 1, after delaying for the CompD1 after receiving the data packet 1, the node B3 schedules the data packet 2 obtained by performing forwarding processing on the data packet 1, and transmits the data packet 2 to the message receiver.

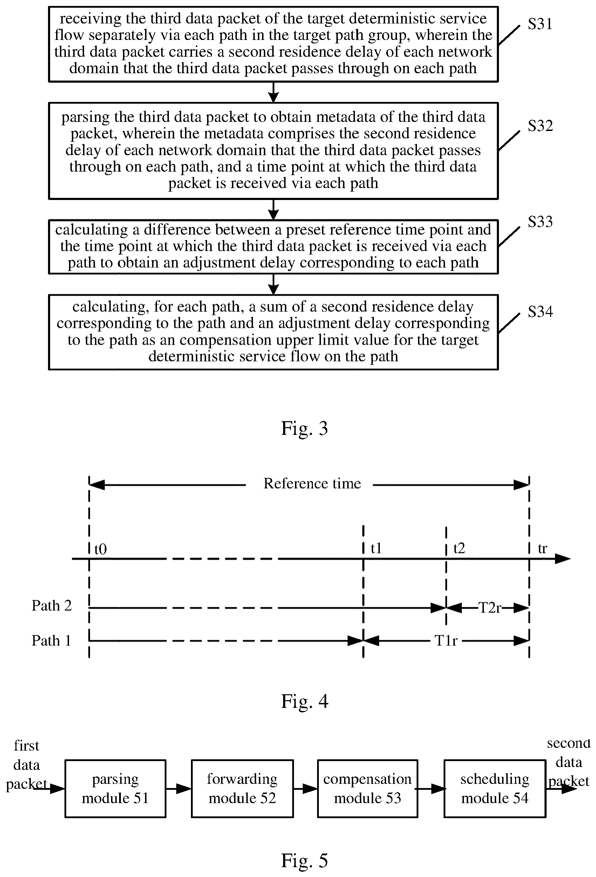

In some examples, before receiving the first data packet via the first path in the target path group, the delay compensation node may learn to determine the compensation upper limit value for the target deterministic service flow on each path included in the target path group. As shown in FIG. 3, which shows a schematic flow chart of a method for obtaining a compensation upper limit value provided by an example of the present disclosure. The method may include the following blocks.

Block S31, receiving the third data packet of the target deterministic service flow separately via each path in the target path group, wherein the third data packet carries a second residence delay of each network domain that the third data packet passes through on each path.

Block S32, parsing the third data packet to obtain metadata of the third data packet, wherein the metadata comprises the second residence delay of each network domain that the third data packet passes through on each path, and a time point at which the third data packet is received via each path.

Block S33, calculating a difference between a preset reference time point and the time point at which the third data packet is received via each path to obtain an adjustment delay corresponding to each path.

Block S34, calculating, for each path, a sum of a second residence delay corresponding to the path and an adjustment delay corresponding to the path as a compensation upper limit value for the target deterministic service flow on the path.

In the technical solution provided by examples of the present disclosure, the preset reference time point and the time point at which the third data packet is received are both time points on the delay compensation node, so that the adjustment delay corresponding to each path, as well as the corresponding compensation upper limit value, can be accurately obtained without the need for time synchronization spanning network domains, which reduces the complexity of the implementation of the solution.

In the above block S31, in transmitting the third data packet through the target path group, the head node copies one third data packet for each path included in the target path group and transmits one third data packet through each path separately. Through each path in the target path group, the delay compensation node receives one third data packet separately. The third data packet carries a second residence delay of each network domain that the third data packet passes through on each path, see the description of the first data packet for details.

In the above block S32, the delay compensation node parses the third data packet to obtain the metadata of the third data packet, i.e., the above second residence delay corresponding to each path, and the time point at which the third data packet is received through each path.

In the above block S33, the delay compensation node may determine a reference delay corresponding to the target path group, the reference delay is the duration between the time point at which the head node sends a data packet and the time point at which the delay compensation node receives the data packet. The preset reference time point is the time point at which the delay compensation node receives the data packet corresponding to the reference delay.

The preset reference time point can be a preset time point. To flexibility determine the compensation upper limit value, the preset reference time point may be determined based on the time point of the data packet when actually received.

For example, the delay compensation node may delay the time point at which the third data packet is received via a specified path in the target path group for the preset adjustment delay to obtain the preset reference time point. In an example of the present disclosure, the delay compensation node determines the specified path in the target path group to obtain a time point at which the third data packet is received through the specified path as a target time point, and delays the target time point for the preset adjustment delay to obtain a preset reference time point. Wherein the specified path may be any path in the target path group, for example, the specified path is a path in the target path group, via which the third data packet is received at the latest. The preset adjustment delay is a delay to be adjusted selected in combination with engineering requirements.

Based on the preset reference time point, for each path, the delay compensation node may calculate a difference between the preset reference time point and the time point at which the third data packet is received through the path to obtain the adjustment delay corresponding to the path.

The determination of the adjustment delay is illustrated in conjunction with the schematic diagram of the time points for receiving data packets shown in FIG. 4. In FIG. 4, path 1 and path 2 form a path group, t0 is a time point at which the head node sends a data packet 0 (such as the third data packet described above) via path 1 and path 2, t1 is a time point at which the delay compensation node receives the data packet 0 through path 1, and t2 is a time point at which the delay compensation node receives the data packet 0 through path 2. T2r is a preset adjustment delay. Taking the specified path being a path in the target path group, via which the third data packet is received at the latest as an example, t2 is later than t1, therefore, the path 2 is the specified path, and t2 is delayed by T2r to obtain the preset reference time point tr. Correspondingly, the adjustment delay T1r corresponding to path 1 is: tr-t1, and the adjustment delay T2r corresponding to path 2 is tr-t2.

In the above block S34, for each path, the delay compensation node statistically obtains the sum value of the second residence delays corresponding to the path, calculates the sum of the above sum value and the adjustment delay corresponding to the path, and the final obtained sum is the compensation upper limit value for the target deterministic service flow on the path.

Fig. 4 is still used as an example for illustration. The data packet 0 belongs to a deterministic service flow 0, a copy of data packet 0 is received via path 1, and the sum value of the residence delays carried by this copy of data packet 0 is ActD01, and another copy of data packet 0 is received via path 2, and the sum value of the residence delays carried by this copy of data packet 0 is ActD02. The delay compensation node determines through calculation that: the compensation upper limit value for the deterministic service flow 0 on the path 1 is ActD01 + T1r, and the compensation upper limit value for the deterministic service flow 0 on the path 2 is ActD02 + T2r.

In examples of the present disclosure, the compensation delay may be expressed as the following formula (1):

$$CompD\_i = Cap\_i - ActD\_i' \qquad (1)$$

wherein CompD_i represents the compensation delay of a deterministic service flow on a path i, Cap_i represents a compensation upper limit value for the deterministic service flow on the path i, and ActD_i' represents a sum of the residence delays of all network domains that a data packet of the deterministic service flow passes through on the path i.

$$Cap\_i = ActD\_i + Tir \qquad (2)$$

where ActD_i represents the sum of the residence delays of all network domains that a data packet of the deterministic service flow passes through on the path i, and Tir represents the adjustment delay corresponding to the path i.

Combined with Fig. 4, the following formula (3) can be obtained.

$$PthRefD\_1 = tr\text{-}t0 = (t1\text{-}t0) + T1r = (FixD\_1 + ActD\_1) + T1r$$
$$= FixD\_1 + ActD\_1 + T1r \qquad (3)$$

Wherein, PthRefD_1 represents the reference delay corresponding to the path 1, (t1-t0) is the delay between the head node and the delay compensation node, and the delay comprises a fixed transmission delay FixD_1 of the data packet on path 1, and a sum ActD_1 of the residence delays in the network domains that the data packet passes through on the path 1.

Converting the above formula (3), the following formula (4) can be obtained.

$$PthRefD\_1 - FixD\_1 = ActD\_1 + T1r \qquad (4)$$

Combining Eq. (4), Eq. (1) and Eq. (2), it can be determined that Cap_i = PthRefD_i - FixD_i, CompD_i = PthRefD_i - FixD_i - ActD_i', where PthRefD_i represents the reference delay corresponding to the path i, and FixD_i represents the fixed transmission delay of the data packet on the path i, and this is exactly the compensation delay calculation method in the related art. Based on this, it can be seen that the compensation upper limit value calculation method provided by the examples of the present disclosure can accurately obtain the compensation upper limit value corresponding to each path without the time synchronization spanning network domains, which reduces the complexity of implementing the solution.

In some examples, after obtaining the compensation upper limit value for the target deterministic service flow on the path, the delay compensation node may send the compensation upper limit value for the target deterministic service flow on each path to a head node of the target path group. In this way, the head node may encapsulate the first compensation upper limit value in the first data packet, i.e., the first data packet sent by the head node carries the first compensation upper limit value. Further, the delay compensation node may obtain the first compensation upper limit value from the first data packet.

In other examples, after obtaining the compensation upper limit value for the target deterministic service flow on the path, the delay compensation node may store the compensation upper limit value for the target deterministic service flow on each path. Subsequently, the delay compensation node may search for the first compensation upper limit value from the stored compensation upper limit value for the target deterministic service flow on each path in the target path group.

In the examples of the present disclosure, the delay compensation node may store the compensation upper limit value according to an actual demand, which is not limited.

In an example of the present disclosure, in order to more accurately learn the compensation upper limit value, the delay compensation node may be configured with an in-flight information table, a flow information table, and a data caching table. The delay compensation node learns the compensation upper limit value based on the configured in-flight information table, the flow information table, and the data caching table.

In some examples, the in-flight information table comprises a flow identifier of a deterministic service flow whose compensation upper limit value is being learned;

each entry in the flow information table comprises a learning indicator bit and flow information of a deterministic service flow configured by a control plane, wherein the learning indicator bit being a first preset value indicates that the learning of the compensation upper limit value of the deterministic service flow has been completed, the learning indicator bit being a second preset value indicates that the learning of the compensation upper limit value of the deterministic service flow has not been completed, and the flow information comprises a flow identifier;

each entry in the data caching table comprises flow information of the deterministic service flow whose compensation upper limit value is being learned, a sequence number of a data packet of the deterministic service flow, and path information corresponding to the sequence number, wherein the path information comprises a sum of residence delays of all network domains that the data packet passes through on each path, and a time point at which the data packet arrives at the delay compensation node along each path;

the metadata further comprises a target flow identifier of the target deterministic service flow;

In this case, the above delay compensation method may also include:

if the in-flight information table and the flow information table satisfy preset learning conditions, adding, to the data caching table, target path information corresponding to a sequence number of the third data packet, wherein the target path information comprises a sum of residence delays of all network domains that the third data packet passes through on a current path, and a time point at which the third data packet arrives at the delay compensation node along the current path;

when the number of pieces of the target path information in the data caching table reaches the number of paths in the target path group, calculating the difference between the preset reference time point and the time point at which the third data packet is received via each path to obtain the adjustment delay corresponding to each path based on the target path information in the data caching table; and updating a learning indicator bit in the flow information table corresponding to the target flow identifier to the first preset value;

the preset learning conditions are:

the in-flight information table does not comprise the target flow identifier, the number of flow identifiers comprised in the in-flight information table is less than a preset number, and the learning indicator bit in the flow information table corresponding to the target flow identifier is a second preset value; or,

the in-flight information table comprises the target flow identifier, and the learning indicator bit in the flow information table corresponding to the target flow identifier is the second preset value.

In some examples, the data caching table comprises a flow head table, sequence node tables and a path information table;

the flow head table comprises the flow information of the deterministic service flow and a first pointer, wherein the first pointer points to the first sequence node table;

a sequence node table of the sequence node tables comprises a sequence number of a data packet, a time point for a latest received data packet, the number of received data packets, a second pointer, and a third pointer, wherein the second pointer points to one path information table, and the third pointer points to a next sequence node table;

each entry in the path information table comprises a path identifier, a sum of residence delays of all network domains that a data packet passes through on a path, and a time point at which the data packet arrives at the delay compensation node along the path.

In some examples, after determining the compensation upper limit value for the target deterministic service flow on each path, the above delay compensation method may further comprise:

setting the target flow identifier in the in-flight information table as an invalid identifier;

recycling an entry associated with the target flow identifier in the data caching table.

In some examples, the flow information further comprises a time window length of the deterministic service flow, the number of paths included in a path group for transmitting the deterministic service flow, and a preset adjustment delay corresponding to the deterministic service flow.

In some examples, the above delay compensation method may further comprise:

determining a target sequence node table with a duration from a first time point to a second time point greater than a time window length, wherein the first time point is a time point for a currently received data packet, the second time point is a time point for a latest received data packet comprised in the target sequence node table, and the target sequence node table is any sequence node table associated with a deterministic service flow to which the currently received data packet belongs;

recycling all sequence node tables subsequent to the target sequence node table and emptying a target path information table pointed to by the target sequence node table.

In some examples, when a sequence number comprised in the target sequence node table is the sequence number of the currently received data packet, the above delay compensation method may further comprise:

updating the target sequence node table and the target path information table based on the currently received data packet;

in the target path information table, determining a target entry with a duration from the first time point to a third time point greater than the time window length, wherein the third time point is a time point recorded in the target entry; and

deleting the target entry.

The way to learn the compensation upper limit values based on the in-flight information table, the flow information table, and the data caching table will be described in detail subsequently and will not be described here.

Corresponding to the above delay compensation method, examples of the present disclosure also provide a delay compensation apparatus, as shown in FIG. 5, which is applied to a delay compensation node, and includes a parsing module 51, a forwarding module 52, a compensation module 53, and a scheduling module 54, wherein the parsing module 51 is connected to the forwarding module 52, the forwarding module 52 is connected to the compensation module 53, and the compensation module 53 is connected to the scheduling module 54.

The parsing module 51 is to receive a first data packet via a first path in a target path group, wherein the first data packet carries a first residence delay of each network domain that the first data packet passes through on the first path, and the first data packet belongs to a target deterministic service flow; and send the first data packet to the forwarding module 52;

the forwarding module 52 is to perform forwarding processing on the first data packet to obtain a second data packet; and send the second data packet to the compensation module 53;

the compensation module 53 is to obtain a first compensation upper limit value for the target deterministic service flow on the first path, wherein the first compensation upper limit value is determined based on a sum of an adjustment delay corresponding to the first path, and second residence delays of all network domains that a third data packet of the target deterministic service flow passes through on the first path; take a difference between the first compensation upper limit value and a sum of all the first residence delays as a current compensation delay; and after delaying for the current compensation delay, send the second data packet to the scheduling module 54;

the scheduling module 54 is to schedule the second data packet.

In the technical solution provided by the examples of the present disclosure, the delay compensation node determines the first compensation upper limit value for the target deterministic service flow on the first path based on the sum of the adjustment delay corresponding to the first path, and the residence delays of all the network domains that the third data packet of the target deterministic service flow passes through on the first path. The head node and the tail node of a section of the first path within one network domain can easily and quickly achieve time synchronization, and thus accurately obtain the residence delays of the third data packet/first data packet within the network domain. The delay compensation node can accurately determine the first compensation upper limit value based on the accurately obtained second residence delays, and thus accurately determine the current compensation delay. Based on the accurate current compensation delay, the delay compensation node performs delay compensation on the data packet, which can effectively eliminate jitters and reduce the jitter in the end-to-end service, such as reducing the jitter between the head node and the tail node of the target path group, and ensuring the deterministic transmission of the end-to-end service.

In an example of the present disclosure, the parsing module 51, the forwarding module 52, and the compensation module 53 may correspond to one or more incoming interfaces, one or more outgoing interfaces. That is, the parsing module 51, the forwarding module 52, and the compensation module 53 may process data packets from the one or more incoming interfaces and send data packets to the one or more outgoing interfaces. To improve the accuracy of the delay compensation and ensure the deterministic transmission, the compensation module 53 may be configured in the outgoing interface, i.e., the compensation module 53 corresponds to one outgoing interface.

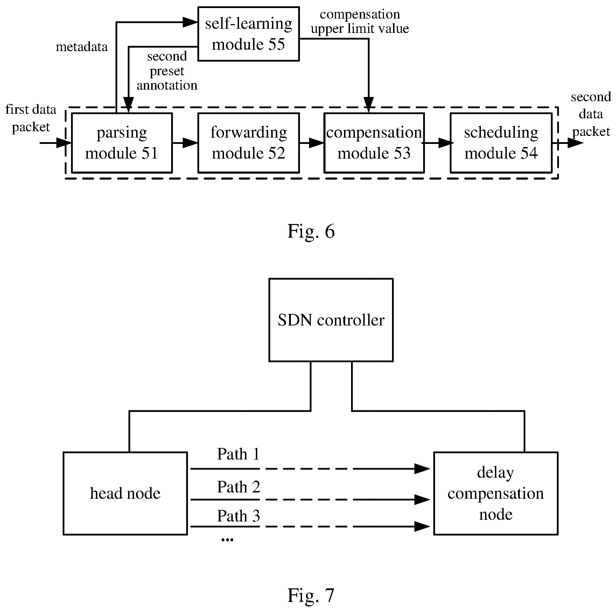

In some examples, the above delay compensation apparatus further comprises a self-learning module 55, as shown in FIG. 6. The self-learning module 55 is connected to the parsing module 51 and the compensation module 53, respectively.

The parsing module 51 is further to receive the third data packet of the target deterministic service flow separately via each path in the target path group, wherein the third data packet carries a second residence delay of each network domain that the third data packet passes through on each path; parse the third data packet to obtain metadata of the third data packet, wherein the metadata comprises the second residence delay of each network domain that the third data packet passes through on each path, and a time point at which the third data packet is received via each path; and report the metadata to the self-learning module 55.

The self-learning module 55 is to calculate a difference between a preset reference time point and the time point at which the third data packet is received via each path to obtain an adjustment delay corresponding to each path; and calculate, for each path, a sum of a second residence delay corresponding to the path and an adjustment delay corresponding to the path as a compensation upper limit value for the target deterministic service flow on the path.

In an example of the present disclosure, the group network for the end-to-end service can be shown in FIG. 7, wherein a plurality of paths, such as paths 1 to paths 3 in FIG. 7, are established between a head node and a delay compensation node (e.g., a tail node), constituting a group of paths which realizes service protection. The head node copies multiple copies of each data packet of a deterministic service flow and sends one copy to each path which realizes service protection, and the delay compensation node automatically learns the compensation upper limit value from the received multiple copies, which is used to calculate a required compensation delay after receiving the data packet of the deterministic service flow, such as the current compensation delay described above.

In an example of the present disclosure, an access control list (ACL) may be configured in the parsing module 51, the ACL may include a preset annotation and flow information configured by a control plane. The control plane may be realized by the SDN controller in FIG. 7, or may be realized by other devices, which is not limited herein. The flow information may comprise the flow identifier of the deterministic service flow, five-tuple information, the time window length of the deterministic service flow, the number of paths included in a path group for transmitting the deterministic service flow, and a preset adjustment delay corresponding to the deterministic service flow. The preset annotation may be a first preset annotation or a second preset annotation. The first preset annotation indicates that no compensation upper limit value has been learned, and the second preset annotation indicates that the compensation upper limit value has been learned.

After receiving a data packet (e.g., the third data packet described above) of the deterministic service flow, the parsing module 51 may look up the ACL to obtain a target ACL to determine whether the learning of the compensation upper limit value is needed for the target deterministic service flow. The parsing module 51 parses the third data packet to obtain metadata, which is data information describing the received data, and may include: the second residence delay of each network domain that the third data packet passes through on each path, a time point at which the third data packet is received via each path (reception time or arrival time), a reception interface (incoming interface), a flow identifier (FlowID), and the like.

For a target ACL that matches the third data packet, if the target ACL comprises the first preset annotation, it means that the learning of the compensation upper limit value is needed for the target deterministic service flow, and the parsing module 51 may send the metadata obtained by parsing the third data packet to the self-learning module 55. The self-learning module 55, after learning the compensation upper limit value for the target deterministic service flow on each path, may update the preset annotation in the target ACL, i.e., update the first preset annotation to the second preset annotation, avoiding the self-learning module 55 from repeatedly learning the compensation upper limit value for the target deterministic service flow, which results in a waste of resources.

In an example of the present disclosure, the parsing module 51 looks up the ACL, and in addition to sending the metadata of the third data packet to the self-learning module 55, it may also send the third data packet to the forwarding module 52, so that the forwarding module 52, the compensation module 53, and the scheduling module 54 perform a delay compensation process on the third data packet. Here, when the compensation module 53 cannot obtain the corresponding compensation upper limit value, the delay compensation of the data packet may not be performed. The scheduling module 54 performs synthetic scheduling for various deterministic service flows, and for deterministic service flows with high accuracy requirements, the scheduling module 54 may perform scheduling with the highest priority after the deterministic service flow has undergone delay compensation.

In some examples, the self-learning module 55 is further to send the compensation upper limit value for the target deterministic service flow on each path to the compensation module; the compensation module 53 is further to store compensation upper limit value for the target deterministic service flow on each path; search for the first compensation upper limit value from the stored compensation upper limit value for the target deterministic service flow on each path in the target path group.

In other examples, the self-learning module 55 is further to send the compensation upper limit value for the target deterministic service flow on each path to a head node of the target path group; wherein the first data packet sent by the head node carries the first compensation upper limit value; the compensation module 53 is specifically to obtain the first compensation upper limit value from the first data packet.

In some examples, the self-learning module 55 is further to delay a time point at which the third data packet is received via a specified path in the target path group for a preset adjustment delay to obtain the preset reference time point. Wherein the specified path is a path in the target path group, via which the third data packet is received at the latest, or may be other paths, which is not limited herein.

The self-learning module 55, after learning the compensation upper limit value for the target deterministic service flow on each path, may send the compensation upper limit value for the target deterministic service flow on each path to the compensation module 53 for the local storage of the compensation upper limit values. The self-learning module 55, after learning the compensation upper limit value for the target deterministic service flow on each path, may also send the compensation upper limit value for the target deterministic service flow on each path to the head node of the target path group so as to facilitate the head node to encapsulate the compensation upper limit value in the data packet.

The self-learning module 55 can issue the compensation upper limit values according to actual needs, improving the flexibility of network configuration and meeting various network needs.

To facilitate the self-learning module 55 to learn the compensation upper limit values, the delay compensation node can be configured with an in-flight information table, a flow information table, and a data caching table, wherein:

the in-flight information table comprises a flow identifier of a deterministic service flow whose compensation upper limit value is being learned;

each entry in the flow information table comprises a learning indicator bit and flow information of a deterministic service flow configured by a control plane, wherein the learning indicator bit being a first preset value indicates that learning of the compensation upper limit value of the deterministic service flow has been completed, the learning indicator bit being a second preset value indicates that the learning of the compensation upper limit value of the deterministic service flow has not been completed, and the flow information comprises a flow identifier;

each entry in the data caching table comprises the flow information of the deterministic service flow whose compensation upper limit value is being learned, a sequence number of a data packet of the deterministic service flow, and path information corresponding to the sequence number, wherein the path information comprises a sum of the residence delay for each path, and a time point at which the data packet arrives at the delay compensation node along each path.

To facilitate more fine-grained management of the data caching table, the data caching table may comprise a flow head table, sequence node tables and a path information table; wherein:

the flow head table comprises the flow information of the deterministic service flow and a first pointer, wherein the first pointer points to a first one of the sequence node tables;

a sequence node table of the sequence node tables comprises a sequence number of a data packet, a time point for a latest received data packet, the number of received data packets, a second pointer, and a third pointer, wherein the second pointer points to one path information table, and the third pointer points to a next sequence node table;

each entry in the path information table comprises a path identifier, a sum of residence delays of all network domains that a data packet passes through on a path, and a time point at which the data packet arrives at the delay compensation node along the path.

The above sequence node tables and path information table may be resources pre-allocated by the self-learning module 55. In this way, when it is necessary to write information to the sequence node tables and the path information table, the information can be written directly to the allocated sequence node tables and the allocated path information table, improving the learning efficiency of the compensation upper limit value.

The above sequence node tables and path information table may also be resources allocated by the self-learning module 55 after receiving a data packet. In this way, when it is necessary to write information to the sequence node tables and the path information table, resources are allocated to create the sequence node tables and the path information table, which can effectively save entry resources of the self-learning module 55.

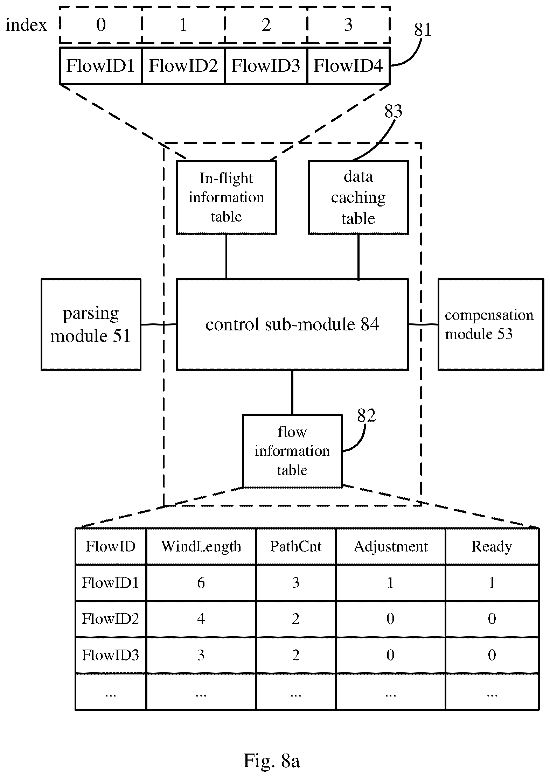

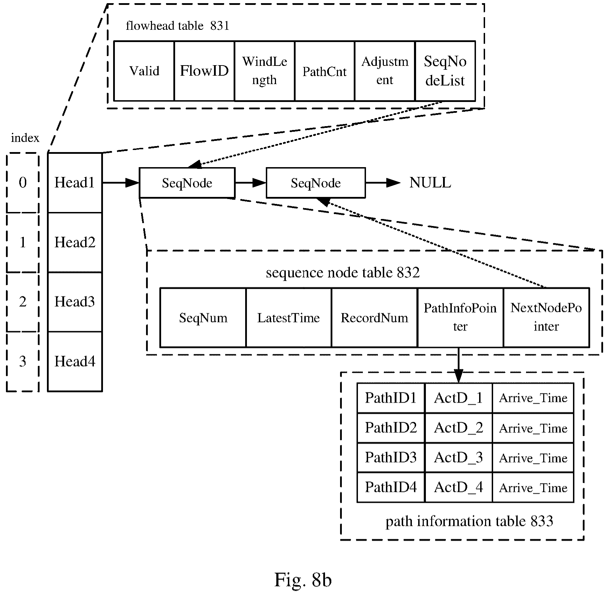

The above mentioned in-flight information table, flow information table, and data caching table are described in detail below with reference to the self-learning module 55 shown in FIG. 8a and the data caching table shown in FIG. 8b. In FIG. 8a and FIG. 8b, the self-learning module 55 comprises a control sub-module 84, an in-flight information table (InFlightInfo) 81, a flow information table (FlowInfoTable) 82, and a data caching table (ScratchInfo) 83, and the data caching table 83 is divided into a flow head table 831, sequence node tables 832, and a path information table 833.

The in-flight information table 81 records FlowIDs of the deterministic service flows currently being learned. To improve the learning efficiency, the compensation upper limit values of multiple deterministic service flows can be learned in parallel. However, in specific scenarios, such as a configuration restoration, during which too many deterministic service flows need to be learned, it is necessary to limit the number of service flows to be learned in parallel. However, the learning of the compensation upper limit values is not instantaneous, and in the example of the present disclosure, the FlowIDs that are currently being learned is recorded through the in-flight information table 81. As in FIG. 8a, the in-flight information table 81 records four FlowIDs, FlowID1 to FlowID4. In accordance with the arrangement order of the FlowIDs in the in-flight information table 81, each FlowID corresponds to an index (Index), the numbers 0 to 3 as shown in the upper part of the in-flight information table 81 in FIG. 8a.

Each row in the flow information table 82 is an entry comprising a learning indicator bit (Ready) and flow information of a deterministic service flow configured by a control plane. In FIG. 8a, as an example, the flow information comprises FlowIDs, time window lengths (WindLength), the number of paths (PathCnt), and preset adjustment delays (Adjustment), which is not restrictive.

Where FlowID can uniquely identify a deterministic flow;

the time window length is a time window for learning;

the number of paths corresponds to the number of paths for deterministic service flows for which service protection is realized;

the preset adjustment delay, corresponding to the compensation delay that needs to be adjusted for deterministic service flows, is selected according to engineering needs.

In an example of the present disclosure, the preset adjustment delay may be set as 200 microseconds ($\mu$s), indicating that a delay of 200 $\mu$s based on an arrival time point on a specified path is used as a basis for calculating the compensation upper limit value, which is equivalent to T2r in FIG. 4. In FIG. 8a, if the value in the column of the preset adjustment delay is set as 1, it indicates that the preset adjustment delay, i.e., 200$\mu$s, has been configured; if the value in the column of the preset adjustment delay is set as 0, it indicates that the preset adjustment delay is not configured, and the preset adjustment delay is taken as 0 $\mu$s.

The learning indicator bit indicates whether the learning of the compensation upper limit value has been completed. A first preset value of 1 and a second preset value of 0 are used as examples in FIG. 8a. The learning indicator bit of 0 indicates that the learning has not been completed; the learning indicator bit of 1 indicates that the learning has been completed; and all the learning indicator bits are set as 0 when the control plane initializes the flow information table 82.

Each row in the data caching table 83 is an entry, and the data caching table 83 is used to cache data information during the learning process. In the examples shown in FIG. 8a and FIG. 8b, which are realized by caching four deterministic service flows simultaneously. The data caching table 83 comprises a flow head table (FlowHead) 831, sequence node tables (SeqNode) 832, and a path information table (PathInfo) 833.

The flow head table 831 is a vector with 4 entries, such as Head1 to Head4 shown in Fig. 8b, describing some public flow information of the currently learned deterministic service flows, and each entry corresponds to an index (Index) according to an order in which the entries are arranged, such as the numbers 0~3 on the left side of the flow head table 831 in Fig. 8b. The same index in the flow head table 831 and the in-flight information table 81 corresponds to one and the same deterministic service flow. Each entry in the flow head table 831 comprises:

Valid: indicates the validity of this entry, 1 means valid, because the vector space is reused, it is indicated by this field. When it is 0, it indicates that this vector is invalid and can be occupied by new learned data; in the flow head table 831, the validity can be omitted, when the validity is omitted, the delay compensation node can realize the recycling of entries by setting the entries in the flow head table 831 to a preset value (e.g., 0), and the entry that is recycled, can be occupied by new learned data.

FlowID: flow identifier, 32bit, uniquely identifies a deterministic service flow; FlowID may be omitted in the flow head table 831. When the FlowID is omitted, the FlowID comprised in each entry may be obtained through the in-flight information table 81.

Time window length: the time window length of a deterministic service flow in nanoseconds (ns), derived from the window length of the flow information table 82; the time window length can have the following functions:

1) aging node data; different copies of different data packets of one deterministic service flow, pass through different paths and arrive at very different times, it is possible that more than one data packet has been received on a path, but the other copies of these data packets have not arrived, so it is necessary to cache relevant data information of multiple data packets in order to ensure that a complete set of data is learned, i.e., all copies of one data packet are collected within one time window; some overtime copies will be aged out.

(2) determining whether the data with the same sequence number is in one time window, if it is not in one time window, the data is invalid, and the sequence number may be rolled back, and not a different copy of one data packet.

The number of paths: the number of paths used by the protection service for the deterministic service flow, derived from the number of paths in flow information table 82. The number of paths is used as a learning ending condition.
Presetting adjustment delay.
A first pointer (SeqNodeList): pointing to the first sequence node table (SeqNode), i.e., to the first pointer of a sequence node table linked list. The self-learning module 55, in the process of learning the compensation upper limit value corresponding to a deterministic service flow, may build one or more sequence node table, which constitute sequence node table linked list, as in FIG. 8b, the first pointer points to one sequence node table immediately adjacent to the flow head table 831.
Each sequence node table stores packet information about a data packet of one sequence number in one deterministic service flow, including:

sequence number (SeqNum): the sequence number of the data packet;

latest arrival time (LatestTime): the time point of the latest received data packet, obtained from the data packet;

the number of valid data packets (RecordNum): the number of the received data packets; used as one of learning ending conditions; one data packet corresponds to one path.

second pointer (PathInfoPointer): points to the path information table;

a third pointer (NextNodePointer): points to the next sequence node table, as in Fig. 8b, the third pointer in the sequence node table immediately adjacent to the flow header table 831 points to the second sequence node table. If a sequence node table does not have a next sequence node table, the third pointer is null, such as NULL.

The path information table 833 comprises information about a group of paths, at least 2 paths forming a protection service group, i.e., a path group, in FIG. 8b, 4 paths are taken as an example. Each row in the path information table 833 is an entry, and one piece of path information comprises:

path identifiers (PathID), such as PathID1 to PathID4 shown in Fig. 8b: the path identifier can be represented by the incoming interface, or the routing information of the data packet, such as the list of Segment Identity (SID) in the SRv6 header;

arrival time: the time point (Arrive_Time) at which the data packet arrives at the delay compensation node along the path, i.e., the time at which it arrives at the delay compensation node;

the cumulative value of the residence delay, ActD_1 to ActD_4 as shown in Fig. 8b: a sum of the residence delays corresponding to paths, i.e., the cumulative value of the actual residence delays corresponding to the paths.

The self-learning module 55 presets learning conditions, i.e., preset learning conditions. The preset learning conditions may be: (1) the in-flight information table does not comprise a target flow identifier, the number of flow identifiers included in the in-flight information table is less than a preset number, and the learning indicator bit in the flow information table corresponding to the target flow identifier is a second preset value; the preset number is the number of deterministic service flows that need the compensation upper limit value in parallel, and the specific size may be set according to the actual demand, for example, the preset number may be 4, 5 or 6, etc. (2) The in-flight information table comprises a target flow identifier, and the learning indicator bit in the flow information table corresponding to the target flow identifier is a second preset value.
Based on the above preset learning conditions, the self-learning module 55 can be specifically to:

if the in-flight information table and the flow information table satisfy the above preset learning conditions (1) or preset learning conditions (2), then the target path information corresponding to the sequence number of the third data packet is added to the data caching table, wherein the target path information comprises a sum of the residence delays of all network domains that the third data packet passes through on the current path, and the time point at which the third data packet arrives at the delay compensation node along the current path; the current path is the path via which the third data packet currently received is transmitted, that is, the path indicated by the above target path information;

when the number of pieces of the target path information in the data caching table reaches the number of paths in the target path group, the compensation upper limit value for the target deterministic service flow on each path is determined based on the target path information in the data caching table, e.g., the difference between the preset reference time point and the time point at which the third data packet is received via each path is calculated based on the target path information in the data caching table to obtain an adjustment delay corresponding to each path, and for each path, a sum of a second residence delay corresponding to the path and an adjustment delay corresponding to the path is calculated based on the target path information in the data caching table, as the compensation upper limit value for the target deterministic service flow on the path; and the learning indicator bit corresponding to the target flow identifier in the flow information table is updated to the first preset value.

The specific manner in which the self-learning module 55 determines the compensation upper limit value for the target deterministic service flow on each path based on the target path information in the data caching table can be seen in the related descriptions of FIGS. 1 to 4. The self-learning module 55 continuously updates the in-flight information table 81, the flow information table 82, and the data caching table 83 in the process of learning the compensation upper limit value in parallel. For example, when the in-flight information table 81 and the flow information table 82 satisfy the above-described preset learning conditions (1), the self-learning module 55 adds the target flow identifier of the target deterministic service flow into the information table 81; after determining the compensation upper limit value for the target deterministic service flow on each path, the learning of the compensation upper limit value has been completed, the self-learning module 55 may set the target flow identifier in the in-flight information table 81 as an invalid identifier (e.g., 0xFFFFFFFF), and recycle the entry associated with the target flow identifier in the data caching table, such as recycle the flow head table, the sequence node table linked list, the path information table, and the like corresponding to the target deterministic service flow.
Alternatively, to ensure the accuracy of a learned compensation upper limit value, the self-learning module 55 may age path information in the sequence node table and the path information table based on the time window length in the data caching table.
For example, the self-learning module 55 can be further to:

determine a target sequence node table with a duration from a first time point to a second time point greater than a time window length, wherein the first time point is a time point for a currently received data packet, the second time point is a time point for a latest received data packet comprised in the target sequence node table, and the target sequence node table is any sequence node table associated with a deterministic service flow to which the currently received data packet belongs; recycle all sequence node tables subsequent to the target sequence node table and empty a target path information table pointed to by the target sequence node table;

when a sequence number comprised in the target sequence node table is a sequence number of the currently received data packet, update the target sequence node table and the target path information table based on the currently received data packet; in the target path information table, determine a target entry with a duration from the first time point to a third time point greater than the time window length, wherein the third time point is a time point recorded in the target entry; and delete the target entry.

The above operations of the self-learning module 55 may be completed by a control sub-module 84. With the above example, the self-learning module 55 can clear the sequence node table and path information that are not in one time window, avoiding the problem of incorrect learning of the compensation upper limit value due to the sequence numbers being rolled back. In addition, each of the above modules may be implemented by software or by hardware, which is not limited.

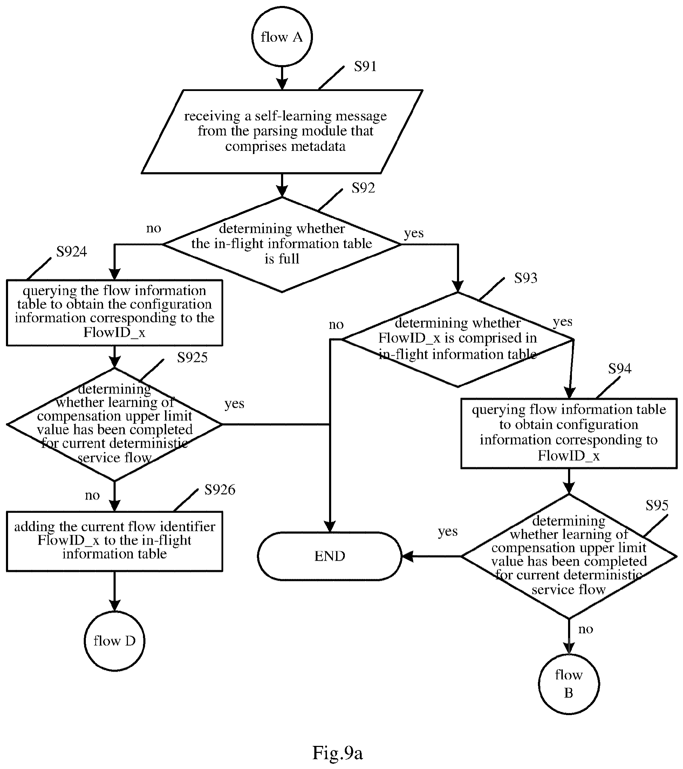

The method of learning compensation upper limit values by the self-learning module 55 provided in examples of the present disclosure is described in detail below in conjunction with the flowchart illustrating the learning of compensation upper limit values shown in FIG. 9a-FIG. 9d. FIG. 9a-FIG. 9d illustrate flow A, flow B, flow C, and flow D, respectively.

Block S91, receiving, by the self-learning module 55, a self-learning message from the parsing module 51 that comprises metadata. The metadata contains: a flow identifier (FlowID), an arrival time (Arrive_Time), a receiving interface (interface), and an actual residence delay for each network domain. The metadata containing a FlowID of FlowID_x is taken as an example below. Assuming that the current data packet is received from path i, the self-learning module 55 can calculate a cumulative value of the residence delay, ActD_i, based on the actual residence delay of each network domain.

Block S92, determining, by the self-learning module 55, whether the in-flight information table 81 is full. If yes, block S93 is performed; if no, block S924 is performed.

In the example of the present disclosure, take that the self-learning module 55 can learn the compensation upper limit values of four deterministic service flows in parallel as an example. A maximum of four FlowIDs can be written in the in-flight information table 81. When four FlowIDs have been written into the in-flight information table 81, the in-flight information table 81 is full, and a maximum value of parallel learning has been reached for the self-learning module 55. The processing of block S92 can play a role in limiting the flow and avoiding an impact of a large number of messages on the self-learning module 55.

Block S93, determining, by the self-learning module 55, whether a FlowID_x is comprised in the in-flight information table 81. If yes, block S94 is performed; if no, the current processing of the self-learning message is ended.

The self-learning module 55 queries the in-flight information table 81 and, if the FlowID_x is queried, determines that the FlowID_x is comprised in the in-flight information table 81, otherwise, determines that the FlowID_x is not comprised in the in-flight information table 81 and the current processing of the self-learning message is ended.

Block S94, querying, by the self-learning module 55, the flow information table 82 to obtain the configuration information corresponding to the FlowID_x, then block S95 is executed. Wherein the configuration information corresponding to the FlowID_x comprises the flow information and the learning indicator bit corresponding to the FlowID_x.

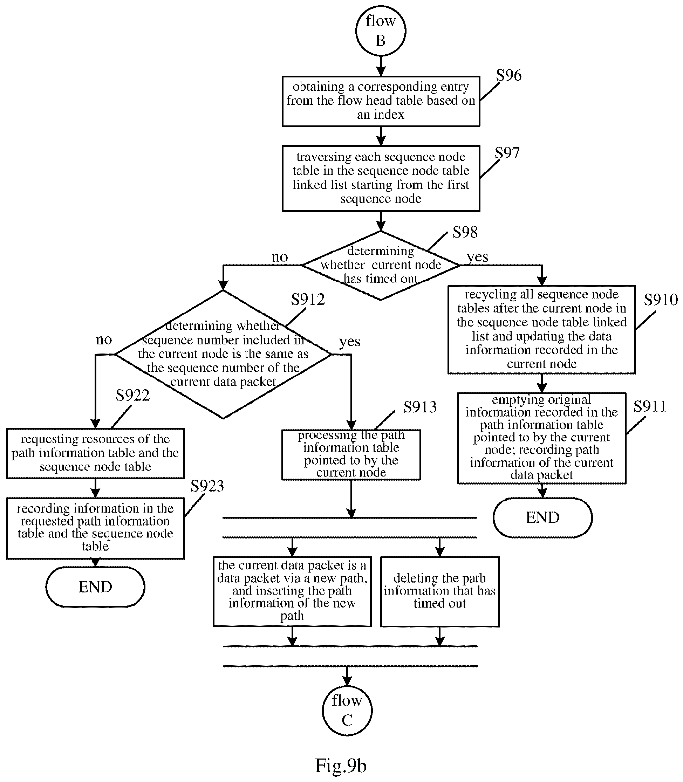

Block S95, determining, by the self-learning module 55, based on the obtained configuration information, whether the learning of the compensation upper limit value has been completed for the current deterministic service flow. If yes, the processing of the current self-learning message is ended; if no, the flow B shown in FIG. 9b is executed, i.e., block S96 is executed.

In an example of the present disclosure, the learning indicator bit being 0 indicates that the learning has not been completed; and the learning indicator bit being 1 indicates that the learning has been completed. If the learning indicator bit in the configuration information is 1, the self-learning module 55 can determine that the learning of the compensation upper limit value has currently completed for the deterministic service flow, which may be caused by the fact that the self-learning module 55 has not completed a synchronization with the parsing module 51; if the learning indicator bit in the configuration information is 0, the self-learning module 55 can determine that the learning of the compensation upper limit value has not completed for the current deterministic service flow.

Block S96, obtaining, by the self-learning module 55, a corresponding entry from the flow head table 831 based on an index of the FlowID_x in the in-flight information table 81. Then, block S97 is performed.

Block S97, traversing, by the self-learning module 55, each sequence node table in the sequence node table linked list starting from the first sequence node table of the sequence node table linked list associated with the obtained entry.

In examples of the present disclosure, the currently traversed sequence node table is referred to as a current node for ease of subsequent description. The current node comprises a sequence number that may be the same as or different from the sequence number of a current data packet.

Block S98, determining, by the self-learning module 55, whether the current node has timed out. If yes, block S910 is performed; if no, block S912 is performed.

In examples of the present disclosure, the self-learning module 55 may obtain the latest arrival time (LatestTime) from the current node, and obtain the arrival time (Arrive_Time) of the current data packet, and also obtain the time window length (WindLength) comprised in the obtained entries. If Arrive_Time - LatestTime > WindLength, the current node has timed out, otherwise, the current node has not timed out.

Block S910, recycling, by the self-learning module 55, all sequence node tables after the current node in the sequence node table linked list and updating the data information recorded in the current node. For example, the self-learning module 55 updates the latest arrival time (LatestTime) of the current node with the arrival time of the current data packet, and the number of valid data packets (RecordNum) is updated to one.

Block S911, emptying, by the self-learning module 55, original information recorded in the path information table 833 pointed to by the current node; recording path information of the current data packet. For example, the self-learning module 55 writes the path identifier (PathID), the arrival time (Arrive_Time), and the ActD_i corresponding to the current data packet into the path information table 833; and ending the processing of the current self-learning message.

Block S912, determining, by the self-learning module 55, whether the sequence number included in the current node is the same as the sequence number of the current data packet. If yes, block S913 is performed; if no, block S922 is performed.

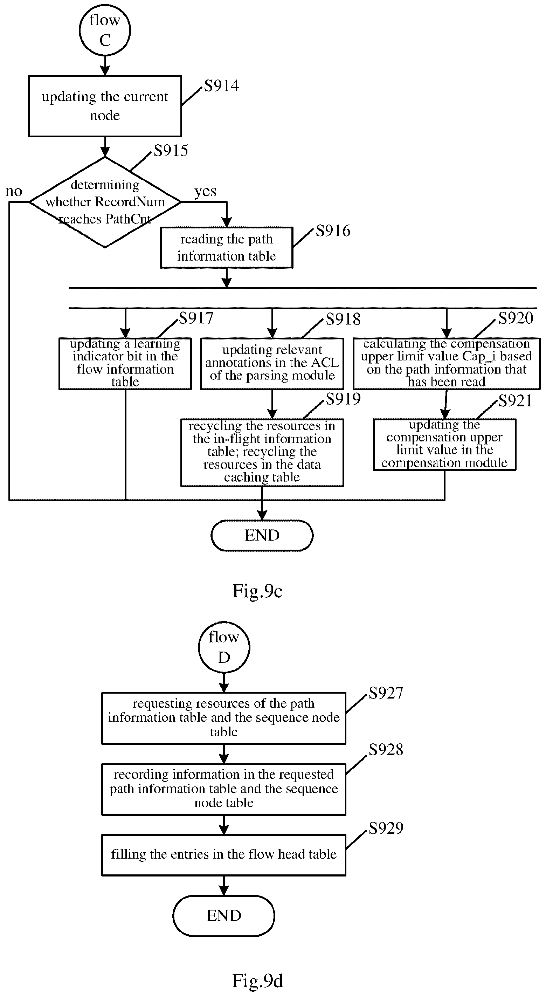

Block S913, processing, by the self-learning module 55, the path information table 833 pointed to by the current node and performing flow C shown in FIG. 9c, i.e., performing block S914.

In the example of the present disclosure, the self-learning module 55 processes the path information table 833, which includes the following two blocks.

Block a, the current data packet is a data packet via a new path, and inserting the path information of the new path into the path information table 833;

Block b, deleting the path information that has timed out in the path information table 833.

For any path information recorded in the path information table 833, take that the path information comprises an arrival time of PathInfo.Arrive_Time, the arrival time of the current data packet is Arrive_Time, and the time window length comprised in the obtained entry is WindLength as an example.

If Arrive_Time - LatestTime > WindLength, it means that the path information has timed out and needs to be deleted, otherwise, it means that the path information has not timed out.

In the example of the present disclosure, the execution order of block A and block B is not limited.

Block S914, updating, by the self-learning module 55, the current node. For example, the self-learning module 55 updates the latest arrival time (LatestTime) of the current node with the arrival time of the current data packet, and updates the number of valid data packets (RecordNum) with the number of pieces of path information comprised in the current path information table 833. The number of pieces of path information comprised in the current path information table 833 can be calculated based on the number of pieces of deleted path information that have timed out and the current newly added path information.

Block S915, determining, by the self-learning module 55, whether RecordNum reaches PathCnt. If yes, block S916 is performed; if no, the processing of the current self-learning message is ended.

Block S916, reading, by the self-learning module 55, the path information table 833 and performing block S917 to block S920.

In examples of the present disclosure, there is no explicit sequence among blocks S917, S918 and S920, and they can be executed in parallel.

Block S917, updating, by the self-learning module 55, the learning indicator bit corresponding to the FlowID_x in the flow information table 82, such as updating the learning indicator bit to 1, and ending the processing of the current self-learning message.

Block S918, updating, by the self-learning module 55, relevant annotations in the ACL of the parsing module 51, for example, updating the first preset annotation in the ACL to the second preset annotation.

Block S919, recycling, by the self-learning module 55, the resources in the in-flight information table 81 corresponding to the FlowID_x, recycling the resources corresponding to the FlowID_x in the data caching table, and ending the the processing of the current self-learning message.

Block S920, calculating, by the self-learning module 55, the compensation upper limit value Cap_i based on the path information that has been read. A reference process is:

a) the number of protection service paths in the example of the present disclosure is 4. They are arranged as t1, t2, t3, and t4 according to the arrival time from early to late;

b) calculating tr= t4+Adjustment. Wherein tr is a preset reference time point.

c) calculating Tir (i is 1 to 4), i.e. Tir = tr - ti; e.g. T1r = tr - t1.

d) calculating Cap_i (i is 1 to 4), i.e. Cap_i = Tir + ActD_i; e.g. Cap_1 = T1r + ActD_1;

Specific calculations can be found in the above relevant descriptions of the FIGs. 1 to 4.

Block S921, updating, by the self-learning module 55, the compensation upper limit value in the compensation module, and ending the processing of the current self-learning message.

Block S922, requesting, by the self-learning module 55, resources of the path information table and the sequence node table, that is, requesting storage space of the path information table and the sequence node table, and performing block S923.

Block S923, recording, by the self-learning module 55, information in the requested path information table and the sequence node table.

For example, the path information of the current data packet, such as PathID, Arrive_Time, and ActD_i are recorded in the path information table. SeqNum, LatestTime, RecordNum, pointers to the path information table, etc. of the current data packet are recorded in the sequence node table; the processing of the current self-learning message is ended.

Block S924, querying, by the self-learning module 55, the flow information table 82 to obtain the configuration information corresponding to the FlowID_x, then performing block S925. Wherein the configuration information corresponding to the FlowID_x comprises the flow information and the learning indicator bit corresponding to the FlowID_x.

Block S925, determining, by the self-learning module 55 based on the obtained configuration information, whether the learning of the compensation upper limit value has been completed for the current deterministic service flow. If yes, the processing of the current self-learning message is ended; if no, block S926 is performed.

Block S926, adding, by the self-learning module 55, the current flow identifier FlowID_x to the in-flight information table 81, executing the process D shown in FIG. 9d, i.e., executing block S927.

In an example of the present disclosure, the self-learning module 55 performs Block S926 in the case where the FlowID_x is not comprised in the in-flight information table 81; in the case where the FlowID_x is comprised in the in-flight information table 81, the self-learning module 55 may perform block S96.

Block S927, requesting, by the self-learning module 55, resources of the path information table and the sequence node table, that is, requesting storage space of the path information table and the sequence node table, and performing block S928.

Block S928, recording, by the self-learning module 55, information in the requested path information table and the sequence node table.

For example, the path information of the current data packet, such as PathID, Arrive_Time, and ActD_i are recorded in the path information table. SeqNum, LatestTime, RecordNum, pointers to the path information table, etc. of the current data packet are recorded in the sequence node table; the processing of the current self-learning message is ended.

At block S929, filling, by the self-learning module 55, the entries in the flow head table 831. The positions of the entries are determined by the position of FlowID_x in the in-flight information table 81. The information filled in the entry comprises WindLength, PathCnt, a pointer to the sequence node table, and the like. Then, the processing of the current self-learning message is ended.

The examples of the present disclosure do not limit the execution order of block S927 and block S929.

In the technical solution provided by the examples of the present disclosure, the delay compensation node determines the first compensation upper limit value for the target deterministic service flow on the first path based on the sum of the adjustment delay corresponding to the first path, and the residence delays of all the network domains that the third data packet of the target deterministic service flow passes through on the first path. The head node and the tail node of a section of the first path within one network domain can easily and quickly achieve time synchronization, and thus accurately obtain the residence delays of the third data packet/first data packet within the network domain. The delay compensation node can accurately determine the first compensation upper limit value based on the accurately obtained second residence delays, and thus accurately determine the current compensation delay. Based on the accurate current compensation delay, the delay compensation node performs delay compensation on the data packet, which can effectively eliminate jitters and reduce the jitter in the end-to-end service, such as reducing the jitter between the head node and the tail node of the target path group, and ensuring the deterministic transmission of the end-to-end service.

In addition, the technical solution provided by the examples of the present disclosure requires only time synchronization within a network domain to achieve accurate delay compensation without a need for time synchronization spanning domains, which reduces the difficulty of implementing the solution and facilitates a wide range of applications, as well as improves the accuracy of the delay compensation.

Corresponding to the delay compensation method described above, examples of the present disclosure also provide a forwarding node that can perform the delay compensation method described in any of the above examples.

The above examples may be implemented in whole or in part by software, hardware, firmware, or any combination thereof. When implemented by using software, it may be implemented in whole or in part in the form of a computer program product. The computer program product comprises one or more computer instructions. Loading and executing the computer program instructions on a computer produces, in whole or in part, a process or function in accordance with the examples of the present disclosure. The computer may be a general purpose computer, a specialized computer, a computer network, or other programmable device. The computer instructions may be stored in a computer-readable storage medium or transmitted from one computer-readable storage medium to another computer-readable storage medium, e.g., the computer instructions may be transmitted by wired (e.g., coaxial cable, fiber optic, digital subscriber line (DSL)) or wireless (e.g., infrared, wireless, microwave, etc.) means from a website site, computer, server, or data center to another website site, computer, server or data center. The computer-readable storage medium may be any available medium that a computer can access or a data storage device such as a server, data center and the like that contains one or more available media integrated. The available medium may be a magnetic medium, (e.g., a floppy disk, a hard disk, a tape), an optical medium (e.g., a DVD), or a semiconductor medium (e.g., a solid state disk (SSD)), and the like.

It is to be noted that, relational terms herein such as first and second are used only to distinguish one entity or operation from another, and do not necessarily require or imply any such actual relationship or order between those entities or operations. Furthermore, the terms "including", "comprising", or any other variant thereof, are intended to cover a non-exclusive inclusion, such that a process, a method, an article, or apparatus comprising a series of elements comprises not only those elements, but also other elements not explicitly listed, or elements inherent to such a process, method, article or apparatus. Without further limitation, an element defined by the phrase "including a/an" does not exclude the existence of other identical elements in the process, method, article or apparatus including the element.

Each example in this specification is described in a related manner, and the same and similar parts between the examples can be referred to each other, and each example focuses on the differences from other examples. In particular, for an example of the forwarding node, since it is basically similar to the method and apparatus examples, the description is relatively simple, and it is sufficient to refer to part of the description of the method and device examples for the relevant points.

The above examples are only the preferred examples of the present disclosure, and are not intended to limit the present disclosure, and any modifications, equivalent substitutions, improvements, etc. made within the spirit and principles of the present disclosure shall be included in the scope of protection of the present disclosure.

**Claims**

1. A delay compensation method applied to a delay compensation node, wherein the method comprises:

   receiving a first data packet via a first path in a target path group, wherein the first data packet carries a first residence delay of each network domain that the first data packet passes through on the first path, and the first data packet belongs to a target deterministic service flow;
   performing forwarding processing on the first data packet to obtain a second data packet;
   obtaining a first compensation upper limit value for the target deterministic service flow on the first path, wherein the first compensation upper limit value is determined based on a sum of an adjustment delay corresponding to the first path, and second residence delays of all network domains that a third data packet of the target deterministic service flow passes through on the first path;
   taking a difference between the first compensation upper limit value and a sum of all the first residence delays as a current compensation delay;
   scheduling the second data packet after delaying the second data packet for the current compensation delay.

2. The method according to claim 1, wherein, before receiving the first data packet via the first path in the target path group, the method further comprises:

   receiving the third data packet of the target deterministic service flow separately via each path in the target path group, wherein the third data packet carries a second residence delay of each network domain that the third data packet passes through on each path;
   parsing the third data packet to obtain metadata of the third data packet, wherein the metadata comprises the second residence delay of each network domain that the third data packet passes through on each path, and a time point at which the third data packet is received via each path;
   calculating a difference between a preset reference time point and the time point at which the third data packet is received via each path to obtain an adjustment delay corresponding to each path;
   calculating, for each path, a sum of a second residence delay corresponding to the path and an adjustment delay corresponding to the path as a compensation upper limit value for the target deterministic service flow on the path.

3. The method according to claim 2, wherein, after obtaining the compensation upper limit value for the target deterministic service flow on the path, the method further comprises:

   storing the compensation upper limit value for the target deterministic service flow on each path;

wherein, obtaining the first compensation upper limit value for the target deterministic service flow on the first path, comprises:

searching for the first compensation upper limit value from the stored compensation upper limit value for the target deterministic service flow on each path in the target path group.

4. The method according to claim 2, wherein, after obtaining the compensation upper limit value for the target deterministic service flow on the path, the method further comprises:

sending the compensation upper limit value for the target deterministic service flow on each path to a head node of the target path group; wherein the first data packet sent by the head node carries the first compensation upper limit value;

wherein, obtaining the first compensation upper limit value for the target deterministic service flow on the first path, comprises:

obtaining the first compensation upper limit value from the first data packet.

5. The method according to any one of claims 2 to 4, wherein before receiving the third data packet, the method further comprises:

obtaining a target access control list matching the third data packet;

in response to determining that the target access control list comprises a first preset annotation, calculating the difference between the preset reference time point and the time point at which the third data packet is received via each path;

after obtaining the compensation upper limit value for the target deterministic service flow on the path, updating the first preset annotation comprised in the target access control list to a second preset annotation, wherein the second preset annotation indicates that the compensation upper limit value has been learned.

6. The method according to claim 2, wherein before obtaining the adjustment delay corresponding to each path, the method further comprises:
delaying a time point at which the third data packet is received via a specified path in the target path group for a preset adjustment delay to obtain the preset reference time point.

7. The method according to claim 6, wherein the specified path is a path in the target path group, via which the third data packet is received at the latest.

8. The method according to claim 2, wherein the delay compensation node is configured with an in-flight information table, a flow information table, and a data caching table;

the in-flight information table comprises a flow identifier of a deterministic service flow whose compensation upper limit value is being learned;

each entry in the flow information table comprises a learning indicator bit and flow information of a deterministic service flow configured by a control plane, wherein the learning indicator bit being a first preset value indicates that learning of the compensation upper limit value of the deterministic service flow has been completed, the learning indicator bit being a second preset value indicates that the learning of the compensation upper limit value of the deterministic service flow has not been completed, and the flow information comprises a flow identifier;

each entry in the data caching table comprises the flow information of the deterministic service flow whose compensation upper limit value is being learned, a sequence number of a data packet of the deterministic service flow, and path information corresponding to the sequence number, wherein the path information comprises a sum of residence delays of all network domains that the data packet passes through on each path, and a time point at which the data packet arrives at the delay compensation node along each path;

the metadata further comprises a target flow identifier of the target deterministic service flow;

the method further comprises:

in response to determining that the in-flight information table and the flow information table satisfy preset learning conditions, adding, to the data caching table, target path information corresponding to a sequence number of the third data packet, wherein the target path information comprises a sum of residence delays of all network domains that the third data packet passes through on a current path, and a time point at which the third data packet arrives at the delay compensation node along the current path;

in response to determining that the number of pieces of the target path information in the data caching table reaches the number of paths in the target path group, calculating the difference between the preset reference time point and the time point at which the third data packet is received via each path to obtain the adjustment delay corresponding to each path based on the target path information in the data caching table; updating a learning indicator bit in the flow information table corresponding to the target flow identifier to the first preset value;

the preset learning conditions are:

the in-flight information table does not comprise the target flow identifier, the number of flow identifiers comprised in the in-flight information table is less than a preset number, and the learning indicator bit in the flow information table corresponding to the target flow identifier is a second preset value; or,
the in-flight information table comprises the target flow identifier, and the learning indicator bit in the flow information table corresponding to the target flow identifier is the second preset value.

9. The method according to claim 8, wherein the data caching table comprises a flow head table, sequence node tables and a path information table;

the flow head table comprises the flow information of the deterministic service flow and a first pointer, wherein the first pointer points to a first one of the sequence node tables;
a sequence node table of the sequence node tables comprises a sequence number of a data packet, a time point for a latest received data packet, the number of received data packets, a second pointer, and a third pointer, wherein the second pointer points to one path information table, and the third pointer points to a next sequence node table;
each entry in the path information table comprises a path identifier, a sum of residence delays of all network domains that a data packet passes through on a path, and a time point at which the data packet arrives at the delay compensation node along the path.

10. The method according to claim 9, wherein after determining the compensation upper limit value for the target deterministic service flow on each path, the method further comprises:

setting the target flow identifier in the in-flight information table as an invalid identifier;
recycling an entry associated with the target flow identifier in the data caching table.

11. The method according to claim 9 or 10, wherein the flow information further comprises a time window length of the deterministic service flow, the number of paths included in a path group for transmitting the deterministic service flow, and a preset adjustment delay corresponding to the deterministic service flow.

12. The method according to claim 11, wherein the method further comprises:

determining a target sequence node table with a duration from a first time point to a second time point greater than a time window length, wherein the first time point is a time point for a currently received data packet, the second time point is a time point for a latest received data packet comprised in the target sequence node table, and the target sequence node table is any sequence node table associated with a deterministic service flow to which the currently received data packet belongs;
recycling all sequence node tables subsequent to the target sequence node table and emptying a target path information table pointed to by the target sequence node table.

13. The method according to claim 12, wherein in response to determining that a sequence number comprised in the target sequence node table is a sequence number of the currently received data packet, the method further comprises:

updating the target sequence node table and the target path information table based on the currently received data packet;
in the target path information table, determining a target entry with a duration from the first time point to a third time point greater than the time window length, wherein the third time point is a time point recorded in the target entry; and
deleting the target entry.

14. A delay compensation apparatus applied to a delay compensation node, wherein the apparatus comprises a parsing module, a forwarding module, a compensation module and a scheduling module;

the parsing module is to receive a first data packet via a first path in a target path group, wherein the first data packet carries a first residence delay of each network domain that the first data packet passes through on the first path, and the first data packet belongs to a target deterministic service flow; and send the first data packet to the forwarding module;

the forwarding module is to perform forwarding processing on the first data packet to obtain a second data packet; and send the second data packet to the compensation module;

the compensation module is to obtain a first compensation upper limit value for the target deterministic service flow on the first path, wherein the first compensation upper limit value is determined based on a sum of an adjustment delay corresponding to the first path, and second residence delays of all network domains that a third data packet of the target deterministic service flow passes through on the first path; take a difference between the first compensation upper limit value and a sum of all the first residence delays as a current compensation delay; and after delaying for the current compensation delay, send the second data packet to the scheduling module;

the scheduling module is to schedule the second data packet.

15. The apparatus according to claim 14, wherein the apparatus further comprises a self-learning module;

the parsing module is further to receive the third data packet of the target deterministic service flow separately via each path in the target path group, wherein the third data packet carries a second residence delay of each network domain that the third data packet passes through on each path; parse the third data packet to obtain metadata of the third data packet, wherein the metadata comprises the second residence delay of each network domain that the third data packet passes through on each path, and a time point at which the third data packet is received via each path; and report the metadata to the self-learning module;

the self-learning module is to calculate a difference between a preset reference time point and the time point at which the third data packet is received via each path to obtain an adjustment delay corresponding to each path; and calculate, for each path, a sum of a second residence delay corresponding to the path and an adjustment delay corresponding to the path as a compensation upper limit value for the target deterministic service flow on the path.

16. The apparatus according to claim 15, wherein

the self-learning module is further to send the compensation upper limit value for the target deterministic service flow on each path to the compensation module;

the compensation module is further to store the compensation upper limit value for the target deterministic service flow on each path; and search for the first compensation upper limit value from the stored compensation upper limit value for the target deterministic service flow on each path in the target path group.

17. The apparatus according to claim 15, wherein the self-learning module is further to send the compensation upper limit value for the target deterministic service flow on each path to a head node of the target path group; wherein the first data packet sent by the head node carries the first compensation upper limit value;

the compensation module is specifically to obtain the first compensation upper limit value from the first data packet.

18. The apparatus according to any one of claims 15 to 17, wherein the parsing module is further to:

obtain a target access control list matching the third data packet;

in response to determining that the target access control list comprises a first preset annotation, report the metadata to the self-learning module, wherein the first preset annotation indicates that no compensation upper limit value has been learned;

the self-learning module is further to, after obtaining the compensation upper limit value for the target deterministic service flow on the path, update the first preset annotation comprised in the target access control list to a second preset annotation, wherein the second preset annotation indicates that the compensation upper limit value has been learned.

19. The apparatus according to claim 15, wherein the self-learning module is further to delay a time point at which the third data packet is received via a specified path in the target path group for a preset adjustment delay to obtain the preset reference time point.

20. The apparatus according to claim 19, wherein the specified path is a path in the target path group, via which the third data packet is received at the latest .

21. The apparatus according to claim 15, wherein the compensation module is configured with an in-flight information table, a flow information table, and a data caching table;

the in-flight information table comprises a flow identifier of a deterministic service flow whose compensation upper limit value is being learned;

each entry in the flow information table comprises a learning indicator bit and flow information of a deterministic service flow configured by a control plane, wherein the learning indicator bit being a first preset value indicates that learning of the compensation upper limit value of the deterministic service flow has been completed, the learning indicator bit being a second preset value indicates that the learning of the compensation upper limit value of the deterministic service flow has not been completed, and the flow information comprises a flow identifier;

each entry in the data caching table comprises the flow information of the deterministic service flow whose compensation upper limit value is being learned, a sequence number of a data packet of the deterministic service flow, and path information corresponding to the sequence number, wherein the path information comprises a sum of residence delays of all network domains that the data packet passes through on each path, and a time point at which the data packet arrives at the delay compensation node along each path;

the metadata further comprises a target flow identifier of the target deterministic service flow;

the self-learning module is specifically to:

in response to determining that the in-flight information table and the flow information table satisfy preset learning conditions, add, to the data caching table, target path information corresponding to a sequence number of the third data packet, wherein the target path information comprises a sum of residence delays of all network domains that the third data packet passes through on a current path, and a time point at which the third data packet arrives at the delay compensation node along the current path;

in response to determining that the number of pieces of the target path information in the data caching table reaches the number of paths in the target path group, calculate the difference between the preset reference time point and the time point at which the third data packet is received via each path to obtain the adjustment delay corresponding to each path based on the target path information in the data caching table; calculate, for each path, a sum of the adjustment delay corresponding to the path, and the second residence delays of all network domains passed through on the path as the compensation upper limit value for the target deterministic service flow on the path based on the target path information in the data caching table; and update a learning indicator bit in the flow information table corresponding to the target flow identifier to the first preset value;

the preset learning conditions are:

the in-flight information table does not comprise the target flow identifier, the number of flow identifiers comprised in the in-flight information table is less than a preset number, and the learning indicator bit in the flow information table corresponding to the target flow identifier is a second preset value; or,

the in-flight information table comprises the target flow identifier, and the learning indicator bit in the flow information table corresponding to the target flow identifier is the second preset value.

22. The apparatus according to claim 21, wherein the data caching table comprises a flow head table, sequence node tables and a path information table;

the flow head table comprises the flow information of the deterministic service flow and a first pointer, wherein the first pointer points to a first one of the sequence node tables;

a sequence node table of the sequence node tables comprises a sequence number of a data packet, a time point for a latest received data packet, the number of received data packets, a second pointer, and a third pointer, wherein the second pointer points to one path information table, and the third pointer points to a next sequence node table;

each entry in the path information table comprises a path identifier, a sum of residence delays of all network domains that a data packet passes through on a path, and a time point at which the data packet arrives at the delay compensation node along the path.

23. The apparatus according to claim 22, wherein the self-learning module is further to:
after determining the compensation upper limit value for the target deterministic service flow on each path, set the target flow identifier in the in-flight information table as an invalid identifier; and recycle an entry associated with the target flow identifier in the data caching table.

24. The apparatus according to claim 22 or 23, wherein the flow information further comprises a time window length of the deterministic service flow, the number of paths included in a path group for transmitting the deterministic service flow, and a preset adjustment delay corresponding to the deterministic service flow.

25. The apparatus according to claim 24, wherein the self-learning module is further to:

determine a target sequence node table with a duration from a first time point to a second time point greater than a time window length, wherein the first time point is a time point for a currently received data packet, the second time point is a time point for a latest received data packet comprised in the target sequence node table, and the target sequence node table is any sequence node table associated with a deterministic service flow to which the currently received data packet belongs;
recycle all sequence node tables subsequent to the target sequence node table and empty a target path information table pointed to by the target sequence node table.

26. The apparatus according to claim 25, wherein the self-learning module is further to:

in response to determining that a sequence number comprised in the target sequence node table is a sequence number of the currently received data packet, update the target sequence node table and the target path information table based on the currently received data packet;
in the target path information table, determine a target entry with a duration from the first time point to a third time point greater than the time window length, wherein the third time point is a time point recorded in the target entry; and
delete the target entry.

27. A forwarding node performing the method according to any one of claims 1 to 13.

Fig. 1

| | |
|---|---|
| receiving a first data packet via a first path in a target path group, wherein the first data packet carries a first residence delay of each network domain that first data packet passes through on first path, and the first data packet belongs to target deterministic service flow | S21 |
| performing forwarding processing on the first data packet to obtain a second data packet | S22 |
| obtaining first compensation upper limit value for target deterministic service flow on first path, first compensation upper limit value being determined based on a sum of adjustment delay corresponding to first path, and second residence delays of all network domains that third data packet of target deterministic service flow passes through on first path | S23 |
| taking a difference between the first compensation upper limit value and a sum of all the first residence delays as a current compensation delay | S24 |
| scheduling the second data packet after delaying the second data packet for the current compensation delay | S25 |

Fig. 2

receiving the third data packet of the target deterministic service flow separately via each path in the target path group, wherein the third data packet carries a second residence delay of each network domain that the third data packet passes through on each path — S31

parsing the third data packet to obtain metadata of the third data packet, wherein the metadata comprises the second residence delay of each network domain that the third data packet passes through on each path, and a time point at which the third data packet is received via each path — S32

calculating a difference between a preset reference time point and the time point at which the third data packet is received via each path to obtain an adjustment delay corresponding to each path — S33

calculating, for each path, a sum of a second residence delay corresponding to the path and an adjustment delay corresponding to the path as an compensation upper limit value for the target deterministic service flow on the path — S34

Fig. 3

Reference time

t0    t1    t2    tr

Path 2 ———————————— T2r →

Path 1 ———————————— T1r ——→

Fig. 4

first data packet → | parsing module 51 | → | forwarding module 52 | → | compensation module 53 | → | scheduling module 54 | → second data packet

Fig. 5

self-learning
module 55

compensation
upper limit value

metadata

second
preset
annotation

first data
packet

parsing
module 51

forwarding
module 52

compensation
module 53

scheduling
module 54

second
data
packet

Fig. 6

SDN controller

head node

Path 1

Path 2

Path 3

...

delay
compensation
node

Fig. 7

| index | 0 | 1 | 2 | 3 |
|-------|---|---|---|---|
| | FlowID1 | FlowID2 | FlowID3 | FlowID4 |

81

83

In-flight information table

data caching table

parsing module 51

control sub-module 84

compensation module 53

flow information table

82

| FlowID | WindLength | PathCnt | Adjustment | Ready |
|--------|-----------|---------|------------|-------|
| FlowID1 | 6 | 3 | 1 | 1 |
| FlowID2 | 4 | 2 | 0 | 0 |
| FlowID3 | 3 | 2 | 0 | 0 |
| ... | ... | ... | ... | ... |

Fig. 8a

flowhead table 831

| Valid | FlowID | WindLength | PathCnt | Adjustment | SeqNodeList |
|---|---|---|---|---|---|

index

| 0 | Head1 |
| 1 | Head2 |
| 2 | Head3 |
| 3 | Head4 |

SeqNode → SeqNode → NULL

sequence node table 832

| SeqNum | LatestTime | RecordNum | PathInfoPointer | NextNodePointer |
|---|---|---|---|---|

| PathID1 | ActD_1 | Arrive_Time |
| PathID2 | ActD_2 | Arrive_Time |
| PathID3 | ActD_3 | Arrive_Time |
| PathID4 | ActD_4 | Arrive_Time |

path information table 833

Fig. 8b

flow A

S91

receiving a self-learning message
from the parsing module that
comprises metadata

S92

no — determining whether
the in-flight information table
is full — yes

S924

querying the flow information
table to obtain the configuration
information corresponding to the
FlowID_x

S925

determining
whether learning of
compensation upper limit
value has been completed
for current deterministic
service flow — yes

no

S926

adding the current flow identifier
FlowID_x to the in-flight
information table

flow D

S93

no — determining whether
FlowID_x is comprised in
in-flight information table — yes

S94

querying flow information table
to obtain configuration
information corresponding to
FlowID_x

S95

yes — determining
whether learning of
compensation upper limit
value has been completed
for current deterministic
service flow

END

no

flow
B

Fig.9a

flow
B

obtaining a corresponding entry from the flow head table based on an index — S96

traversing each sequence node table in the sequence node table linked list starting from the first sequence node — S97

determining whether current node has timed out — S98

no → determining whether sequence number included in the current node is the same as the sequence number of the current data packet — S912

yes → recycling all sequence node tables after the current node in the sequence node table linked list and updating the data information recorded in the current node — S910

emptying original information recorded in the path information table pointed to by the current node; recording path information of the current data packet — S911

no → requesting resources of the path information table and the sequence node table — S922

recording information in the requested path information table and the sequence node table — S923

yes → processing the path information table pointed to by the current node — S913

END

the current data packet is a data packet via a new path, and inserting the path information of the new path

deleting the path information that has timed out

END

flow
C

Fig.9b

```
                    ┌───────┐
                    │ flow  │
                    │   C   │
                    └───┬───┘
                        ▼
           ┌─────────────────────┐
           │ updating the current│ ┌ S914
           │        node         │
           └──────────┬──────────┘
                      ▼           ┌ S915
              ╱───────────────╲
   no        ╱   determining   ╲        yes
 ◄──────────◄ whether RecordNum ►──────────┐
            ╲  reaches PathCnt  ╱           │
             ╲─────────────────╱            ▼
                                 ┌─────────────────────┐
                                 │   reading the path  │ ┌ S916
                                 │  information table   │
                                 └──────────┬──────────┘
                                            ▼
```

|  |  |  |
|---|---|---|
| S917 | S918 | S920 |
| updating a learning indicator bit in the flow information table | updating relevant annotations in the ACL of the parsing module | calculating the compensation upper limit value Cap_i based on the path information that has been read |
|  | S919 | S921 |
|  | recycling the resources in the in-flight information table; recycling the resources in the data caching table | updating the compensation upper limit value in the compensation module |

```
                    ┌───────────┐
                    │    END    │
                    └───────────┘
```

Fig.9c

```
                    ┌───────┐
                    │ flow  │
                    │   D   │
                    └───┬───┘
                        ▼
        ┌──────────────────────────────┐
        │ requesting resources of the  │ ┌ S927
        │ path information table and    │
        │ the sequence node table       │
        └───────────────┬──────────────┘
                        ▼
        ┌──────────────────────────────┐
        │ recording information in the  │ ┌ S928
        │ requested path information     │
        │ table and the sequence         │
        │ node table                     │
        └───────────────┬──────────────┘
                        ▼
        ┌──────────────────────────────┐
        │ filling the entries in the    │ ┌ S929
        │ flow head table                │
        └───────────────┬──────────────┘
                        ▼
                  ┌───────────┐
                  │    END    │
                  └───────────┘
```

Fig.9d

## INTERNATIONAL SEARCH REPORT

| International application No. |
| --- |
| **PCT/CN2023/108480** |

| A. | CLASSIFICATION OF SUBJECT MATTER |
| --- | --- |

H04L 47/283(2022.01)i

According to International Patent Classification (IPC) or to both national classification and IPC

| B. | FIELDS SEARCHED |
| --- | --- |

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNTXT, CJFD, VEN, ENTXT, 3GPP: 确定性, 域, 多, 不同, 跨, 各, 每个, 延时, 时延, 时间, 补偿, 同步, 驻留, 传输, 和, deterministic, domain, multiple, different, two, more, several, across, every, each, delay, time, compensat+, synchron+, residen+, transmi+, sum

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 114430397 A (RESEARCH INSTITUTE OF CHINA MOBILE COMMUNICATIONS CORP. et al.) 03 May 2022 (2022-05-03) entire document | 1-27 |
| A | US 2018103094 A1 (CISCO TECHNOLOGY, INC.) 12 April 2018 (2018-04-12) entire document | 1-27 |
| A | CN 115665024 A (ZTE CORP.) 31 January 2023 (2023-01-31) entire document | 1-27 |
| A | CN 116248589 A (ZTE CORP.) 09 June 2023 (2023-06-09) entire document | 1-27 |

☐ Further documents are listed in the continuation of Box C.  ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 November 2024** | **22 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/108480**

| Patent document cited in search report | | | Publication date (day/month/year) | Patent family member(s) | | | Publication date (day/month/year) |
|---|---|---|---|---|---|---|---|
| CN | 114430397 | A | 03 May 2022 | None | | | |
| US | 2018103094 | A1 | 12 April 2018 | US | 10681128 | B2 | 09 June 2020 |
| CN | 115665024 | A | 31 January 2023 | None | | | |
| CN | 116248589 | A | 09 June 2023 | None | | | |

Form PCT/ISA/210 (patent family annex) (July 2022)